# EUROPÄISCHE PATENTSCHRIFT

(11) **EP 2 745 469 B1**
(45) Veröffentlichungstag und Bekanntmachung des Hinweises auf die Patenterteilung: **17.06.2015**
(21) Anmeldenummer: 11785017.2
(22) Anmeldetag: 18.11.2011
(51) Int. Cl.: H04L 12/28, G08C 23/04, H04L 29/06

(54) **HEIMAUTOMATISIERUNG FÜR GERÄTE DER UNTERHALTUNGSELEKTRONIK**
HOME AUTOMATION FOR CONSUMER ELECTRONICS DEVICES
SYSTÈME D'AUTOMATISATION DOMESTIQUE POUR DES APPAREILS ÉLECTRONIQUES DE DIVERTISSEMENT

(30) Priorität: 15.08.2011 DE 102011110139
(43) Veröffentlichungstag der Anmeldung: 25.06.2014
(73) Patentinhaber: RWE Effizienz GmbH, 44139 Dortmund (DE)
(72) Erfinder: HOFFMANN, Wolfgang, 44289 Dortmund (DE)
(74) Vertreter: Cohausz & Florack
(86) Internationale Anmeldenummer: PCT/EP2011/070461
(87) Internationale Veröffentlichungsnummer: WO 2013/023709

(56) Entgegenhaltungen:
- US-A- 5 815 086
- US-A1- 2003 061 380
- US-A1- 2007 124 447
- US-A1- 2009 072 991
- ECHONET CONSORTIUM: "ECHONET OVERVIEW", , Juli 2000 (2000-07), XP002673666, Gefunden im Internet: URL:http://www.echonet.gr.jp/english/spec/ pdf/spec_v1e_1.pdf [gefunden am 2012-04-11]

## Beschreibung

Der Gegenstand betrifft eine Heimautomatisierungssteuervorrichtung, insbesondere zur Steuerung von Geräten der Unterhaltungselektronik unter Verwendung eines Heimautomatisierungssystems.

Die Heimautomatisierungssteuerung findet eine immer größere Bedeutung in der häuslichen Anwendung. So sind verschiedene Heimautomatisierungssysteme bekannt, die funk- oder kabelgebunden sind. Eines der prominentesten Beispiele eines Heimautomatisierungssystems ist der sogenannte europäische Installationsbus (EIB), der sowohl kabelgebunden als auch drahtlos eine Kommunikation zwischen Sensoren und Aktoren ermöglicht.

Unter der Bezeichnung "RWE SmartHome" ist ein Heimautomatisierungssystem der Anmelderin bekannt, bei dem Aktoren und Sensoren über ein proprietäres Protokoll funkgebunden miteinander kommunizieren. Ein lokaler Dienstknoten, der als Steuerungszentrale (Smart Home Controller SHC) fungiert, kann dabei Kommunikation zwischen den Sensoren und Aktoren koordinieren und parametrieren als auch eine Kommunikation mit einem über ein Weitverkehrsnetz, insbesondere das Internet, erreichbaren Webserver ermöglichen. Ein Nutzer kann bei diesem System seine Heimautomatisierung entweder über den Webserver oder den lokalen Dienstknoten konfigurieren.

Durch den großflächigen Einsatz von Heimautomatisierungssteuerungen ergeben sich immer neue Anforderungen, insbesondere betreffend den Nutzerkomfort. Eine solche Anforderung kann darin bestehen, bestehende Geräte der Unterhaltungselektronik, die regelmäßig über Infrarotfernbedienungen bedient werden, in die Heimautomatisierungssteuerung einzubinden oder zumindest mittels der Heimautomatisierungssteuerung ansprechen zu können. Problematisch hierbei ist jedoch, dass zwar Standards für die Infrarotbedienung von Geräten der Unterhaltungselektronik existieren, diese jedoch von verschiedenen Herstellern höchst unterschiedlich gehandhabt werden. Dies führt dazu, dass keine einheitliche Regelung zu Steuerbefehlen für Geräte der Heimautomatisierung mittels Infrarot bestehen. Aus diesem Grunde ist es für die Heimautömatisierungssteuerung bisher nicht möglich gewesen, Geräte der Unterhaltungselektronik aufgrund der Vielfältigkeit dieser einzubinden.

Die Offenlegungsschrift US2009/0072991 veröffentlicht ein Heimnetzwerk mit einer Steuereinheit, die Steuerbefehle ermittelt, wobei diese Steuerbefehle entsprechend einer Umsetzungstabelle in korrespondierende Infrarot-Steuerbefehle umgesetzt werden.

Dem Gegenstand lag somit die Aufgabe zugrunde, Geräte der Unterhaltungselektronik nutzerfreundlich und variabel in ein Heimautomatisierungssystem einbinden zu können.

Diese Aufgabe wird gegenständlich durch eine Heimautomatisierungssteuervorrichtung nach Anspruch 1 gelöst.

Zum Empfangen von Steuerbefehlen sind Empfangsmittel eingerichtet. Vorzugsweise sind die Steuerbefehle in einem ersten Datencontainer enthalten. Besonders bevorzugt ist der erste Datencontainer in einem Format formatiert, wie es für ein Heimautomatisierungssystem verwendet wird. Demgemäß kann der Datencontainer einem Heimautomatisierungssteuerungsprotokoll genügen.

Ferner sind Sendemittel vorgesehen. Diese Sendemittel sind dazu eingerichtet, Infrarot-Sendebefehle zu übermitteln. Die Infrarot-Sendebefehle sind vorzugweise in einem zweiten Datencontainer enthalten. Auch der zweite Datencontainer genügt vorzugsweise einem Heimautomatisierungssteuerungsprotokoll. Insbesondere ist das Protokoll das gleiche, wie das Protokoll des ersten Datencontainers.

Ein Infrarot-Sendebefehl ist vorzugsweise ein Befehl, der mittels Infrarot an ein Gerät der Unterhaltungselektronik übertragen werden kann. So kann ein Infrarot-Sendebefehl eine zu übertragende Information in einer Infrarot-Pulsfolge codiert enthalten. Entsprechend der Information in die Infrarot-Pulsfolge kann ein Infrarot-Sender anschließend, nach Empfang des Infrarot-Sendebefehls, Infrarot-Pulse aussenden. Die ausgesendeten Infrarot-Pulse werden von dem Gerät der Unterhaltungselektronik empfangen und in einen entsprechenden Befehl umgewandelt.

Rein beispielhaft kann zum Beispiel ein Infrarot-Sendebefehl eine Bitfolge sein. So ist es beispielsweise möglich, dass für ein bestimmtes Gerät eine Bitfolge 101 einem Infrarot-Befehl "AN" entspricht und eine Bitfolge 100 einem Infrarot-Befehl "AUS". Enthält der Infrarot-Sendebefehl die Bitfolge 101 und wird diese von einem Infrarot-Sender empfangen, kann dieser eine Infrarot-Pulsfolge "ein-aus-ein" senden. Diese würde dann von dem Gerät der Unterhaltungselektronik entsprechend in den "EIN" Befehl umgewandelt.

Verschiedene Geräte der Unterhaltungselektronik interpretieren Infrarot-Sendebefehle unterschiedlich. So kann auf einem ersten Gerät beispielsweise die Pulsfolge 101 "AN" bedeuten, auf einem anderen Gerät kann die Pulsfolge 101 "AUS" bedeuten. Daher ist es notwendig, zu wissen, welches Gerät der Unterhaltungselektronik mittels der Infrarot-Sendebefehle angesteuert werden soll.

Um eine Umsetzung der Steuerbefehle in die für ein Gerät der Unterhaltungselektronik jeweils angepassten Infrarot-Sendebefehle zu ermöglichen, wird ein Kommunikationsmittel vorgeschlagen. Dieses ist eingerichtet zum Empfangen von zumindest einer Umsetzungstabelle mit gerätespezifischen Infrarot-Sendebefehlen. Ein Nutzer kann angeben, welches Gerät der Unterhaltungselektronik er bedienen möchte. Entsprechend der Angabe erhält der Benutzer die Umsetzungstabelle über die Kommunikationsmittel zugestellt. Mit Hilfe der Umsetzungsmittel kann der Benutzer dann in besonders einfacher Weise verschiedenste Geräte der Unterhaltungselektronik ansteuern.

Hierzu sind Umsetzungsmittel vorgesehen. Mit Hilfe der Umsetzungsmittel wird der Steuerbefehl aus dem ersten Datencontainer ermittelt. Anschließend kann der ermittelte Steuerbefehl in einen korrespondierenden Infrarot-Sendebefehl umgesetzt werden. Hierzu kann die Umsetzungstabelle verwendet werden. Beispielsweise kann ein Steuerbefehl 111 stets die Funktion "Ein" beinhalten. Im obigen Beispiel würde der Steuerbefehl 111 dann in den Infrarot-Sendebefehl 101 umgewandelt. Für ein anderes Gerät der Unterhaltungselektronik wäre der Infrarot-Sendebefehl eventuell ein anderer. Der anhand der Umsetzungstabelle ermittelte Infrarot-Sendebefehl wird in einen zweiten Datencontainer verpackt, so dass er an die Sendemittel versendet werden kann.

Gemäß einem vorteilhaften Ausführungsbeispiel wird vorgeschlagen, dass in dem Infrarot-Sendebefehl zumindest eine Geräteadresse enthalten ist. Ferner kann in dem Infrarot-Sendebefehl ein Stellkommando enthalten sein. Mit Hilfe der Geräteadresse ist es möglich, ein bestimmtes Gerät bzw. ein Gerät eines bestimmten Herstellers anzusprechen. Das Stellkommando kann dann den Steuerbefehl enthalten, beispielsweise "EIN" oder "AUS". Insbesondere wird vorgeschlagen, dass der Infrarot-Sendebefehl einen Befehl gemäß einem RC5-Code, einem RC5a-Code, einem RC6-Code oder einem RC6a-Code enthält. Die genannten Codes werden heutzutage häufig verwendet, um Geräte der Unterhaltungselektronik mittels Infrarot anzusteuern.

Gemäß einem vorteilhaften Ausführungsbeispiel wird vorgeschlagen, dass ein Steuerbefehl zumindest ein Stellkommando enthält. Wie eingangs bereits erläutert, kann der Steuerbefehl ein Stellkommando "EIN" oder ein Stellkommando "AUS" enthalten. Vorzugsweise besteht eine eindeutige Zuordnung zwischen einem Stellkommando und der entsprechenden zu stellenden Funktion. In diesem Fall kann eine bestimmten Bitfolge ein bestimmtes Stellkommando zugeordnet sein, beispielsweise die Bitfolge 111 dem Kommando "EIN" und die Bitfolge 000 dem Kommando "AUS". Die Stellkommandos werden in dem ersten Datencontainer übertragen und von den Umsetzungsmitteln ausgewertet.

Wie eingangs bereits erläutert, wird gemäß einem vorteilhaften Ausführungsbeispiel vorgeschlagen, dass der erste und der zweite Container gemäß einem gemeinsamen ersten Protokoll codiert sind. Insbesondere ist das erste Protokoll ein Protokoll eines Heimautomatisierungssystems. Vorzugsweise kann ein solches Protokoll zum Beispiel ein Funkprotokoll sein.

Gemäß einem vorteilhaften Ausführungsbeispiel wird vorgeschlagen, dass der erste und/oder der zweite Datencontainer jeweils zumindest ein Zieladressfeld enthalten. Ein Zieladressfeld kann die Adresse des Gerätes enthalten, für welches der Datencontainer bestimmt ist. Insbesondere kann das Zieladressfeld des ersten Datencontainers mit einer Adresse der Heimautomatisierungssteuerungsvorrichtung versehen sein. Dies bedeutet, dass der erste Datencontainer stets an die Heimautomatisierungssteuervorrichtung gerichtet ist und von dieser empfangen wird. Die Zieladresse bzw. das Zieladressfeld des zweiten Datencontainers kann eine Adresse einer Infrarot-Sendeeinrichtung enthalten. In diesem Fall wird der zweite Datencontainer stets von der Infrarot-Sendeeinrichtung empfangen, welche die in dem zweiten Datencontainer enthaltenen Infrarot-Sendebefehle auswerten kann und die darin enthaltenen Stellkommandos verwenden kann, um eine entsprechende Infrarot-Pulsfolge auszusenden, die von einem Gerät der Unterhaltungselektronik für die Ausführung eines Kommandos verwendet werden kann.

Da der Datencontainer in einem Format gemäß eines Heimautomatisierungssteuerungsprotokoll codiert sein kann, kann es vorkommen, dass dieses Protokoll die Verwendung von Steuerbefehlen nicht unmittelbar unterstützt, sondern lediglich das Versenden von Informationen in einem Nutzerdatenfeld (Payload). Was diese Informationen bedeuten, kann zunächst gemäß des Protokolls undefiniert bleiben. Um die Nutzerdaten auswerten zu können, können diese zumindest in einem Identifikationsfeld Informationen enthalten, dass die sich anschließenden Informationen einen Steuerbefehl enthalten. Die Heimautomatisierungssteuervorrichtung kann dann das Nutzerdatenfeld auslesen, in dem Identifikationsfeld überprüfen, um welche Art von Nutzerdaten es sich handelt und gegebenenfalls den Steuerbefehl auslesen.

Gemäß einem vorteilhaften Ausführungsbeispiel wird vorgeschlagen, dass die Empfangsmittel und/oder die Sendemittel zum Übertragen des ersten und/oder zweiten Datencontainers per Funk, insbesondere einem SRD-Band, eingerichtet sind. Insbesondere auf einer Frequenz von 868,3 MHz kann eine Kommunikation der Empfangs- und Sendemittel stattfinden. Gerade die genannte Frequenz eignet sich für die Heimautomatisierungssteuerung, da sich diese in einem Frequenzband befindet, welches für solche Anwendungen freigegeben ist.

Der in dem ersten Datencontainer enthaltene Steuerbefehl kann vorzugsweise unspezifisch sein. Das bedeutet, dass der Steuerbefehl keiner Funktion zugeordnet ist, sondern lediglich angibt, von welcher Taste oder welchem Sensor er ausgelöst wurde. Beispielsweise kann eine Funkfernbedienung mit verschiedenen Tasten versehen sein. Ein Sensor innerhalb des Heimautomatisierungssteuerungssystem kann die Tastendrücke von dieser Funkfernbedienung empfangen und entsprechend der empfangenen Tastendrücke die Steuerbefehle aussenden. In diesem Fall wäre in jedem Steuerbefehl lediglich die Information enthalten, welche Taste gedrückt wurde. Um der jeweiligen Taste eine Funktion zuzuordnen, ist es möglich, die einzelnen Tasten innerhalb der Umsetzungstabelle einem Infrarot-Sendebefehl zuzuordnen. So ist es beispielsweise möglich, dass das Drücken der Taste 1 dem Befehl "EIN" zugeordnet wird und dass das Drücken der Taste 2 dem Befehl "AUS". Da die verschiedenen Infrarot-Steuerbefehle gerätespezifisch sind, wird vorgeschlagen, dass in der Umsetzungstabelle die Zuordnung eines Steuerbefehls zu einem Infrarot-Sendebefehl innerhalb der Umsetzungsmittel konfigurierbar ist. Hierzu kann eine Nutzerschnittstelle zur Verfügung gestellt werden, mit deren Hilfe ein Nutzer einzelnen Steuerbefehlen und somit einzelnen Tasten oder Sensoren bestimmte Infrarot-Sendebefehle zuordnen kann. Mit Hilfe der Umsetzungsmittel wird dann beim Drücken der entsprechenden Taste oder beim Aktivieren des entsprechenden Sensors der zugeordnete Infrarot-Sendebefehl in den Umsetzungsmitteln ermittelt und mit Hilfe der Sendemittel ausgesendet werden.

Wie bereits erläutert, können verschiedene Geräte der Unterhaltungselektronik identische Infrarot-Sendebefehle für verschiedene Funktionen (und umgekehrt) verwenden. So kann ein Sendebefehl bei einem ersten Gerät eine erste Funktion auslösen, welche verschieden von einer Funktion eines zweiten Geräts ist. Um dieser Tatsache gerecht zu werden, wird vorgeschlagen, dass die in der Umsetzungstabelle enthaltenen Infrarot-Sendebefehle gerätespezifisch sind. Die Kommunikationsmittel können von einem zentralen Server, vorzugsweise über das Internet, abhängig von Angaben des Benutzers über die Art des Gerätes der Unterhaltungselektronik verschiedene Umsetzungstabellen empfangen und für die Umsetzungsmittel bereitstellen. In diesem Fall ist sichergestellt, dass die Infrarot-Sendebefehle, die ausgesendet werden, stets den von dem Benutzer gewählten Gerät der Unterhaltungselektronik Rechnung tragen.

Ein weiterer Aspekt ist ein System zur Heimautomatisierung nach Anspruch 9. Hierbei kann eine Heimautomatisierungssteuervorrichtung nach Anspruch 1 in das System eingebunden sein.

Vorzugsweise kann ein Sensor innerhalb des Heimautomatisierungssystems vorgesehen sein, der Nutzeraktionen aufnimmt und abhängig von den Nutzeraktionen Steuerbefehle in dem ersten Datencontainer, vorzugsweise per Funk versendet. Der Sensor kann vorzugsweise ein Funkempfänger sein, der zum Empfangen von Steuerbefehlen von einem Funksender eingerichtet ist.

Ferner kann in das System eine Infrarot-Sendeeinrichtung eingebunden sein. Die Infrarot-Sendeeinrichtung kann Infrarot-Sendebefehle, die vorzugsweise in dem zweiten Datencontainer codiert sind, empfangen. Abhängig von den empfangenen Infrarot-Sendebefehlen kann die Infrarot-Sendeeinrichtung Infrarot-Pulse aussenden, die von einem Gerät der Unterhaltungselektronik empfangen werden können und in entsprechende Aktionen umgesetzt werden können.

Besonders bevorzugt wird die Umsetzungstabelle von einem Webserver bereitgestellt, und von den Kommunikationsmitteln empfangen. Hierbei kann vorzugsweise eine Kommunikation zwischen Webserver und Kommunikationsmitteln über ein Weitverkehrsnetz, vorzugsweise das Internet, stattfinden.

Auch wird vorgeschlagen, dass der Webserver einen Speicher enthält, auf dem eine Mehrzahl von Umsetzungstabellen für verschiedene Geräte der Unterhaltungselektronik gespeichert sein können.

Um einem Benutzer der Heimautomatisierungssteuervorrichtung die Möglichkeit zu geben, unterschiedliche Geräte der Unterhaltungselektronik mittels Infrarot anzusteuern, wird vorgeschlagen, dass entweder der Webserver oder die Heimäutomatisierungssteuervorrichtung Mittel enthält, mit deren Hilfe eine grafische Nutzerschnittstelle erzeugt werden kann. Diese kann beispielsweise auch auf einem Browser eines Nutzercomputers angezeigt werden, wobei der Nutzercomputer dann eine Verbindung zu der Heimautomatisierungssteuervorrichtung oder dem Webserver aufbaut. Mit Hilfe der Nutzerschnittstelle kann ein Nutzer ein spezielles Gerät der Unterhaltungselektronik auswählen. Hierbei kann der Benutzer eine Liste der möglichen Geräte der Unterhaltungselektronik angeboten werden. Abhängig von der Auswahl des Gerätes der Unterhaltungselektronik kann der Webserver eine korrespondierende Umsetzungstabelle an die Kommunikationsmittel übertragen.

Ein weiterer Aspekt ist ein Verfahren nach Anspruch 12.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein System zur Heimautomatisierungssteuerung;
- Fig. 2: eine Umsetzungstabelle;
- Fig. 3: eine Umsetzungstabelle mit einer Zuordnung zwischen Steuerbefehlen und Infrarot-Sendebefehlen;
- Fig. 4a): einen ersten Datencontainer;
- Fig. 4b): einen zweiten Datencontainer.

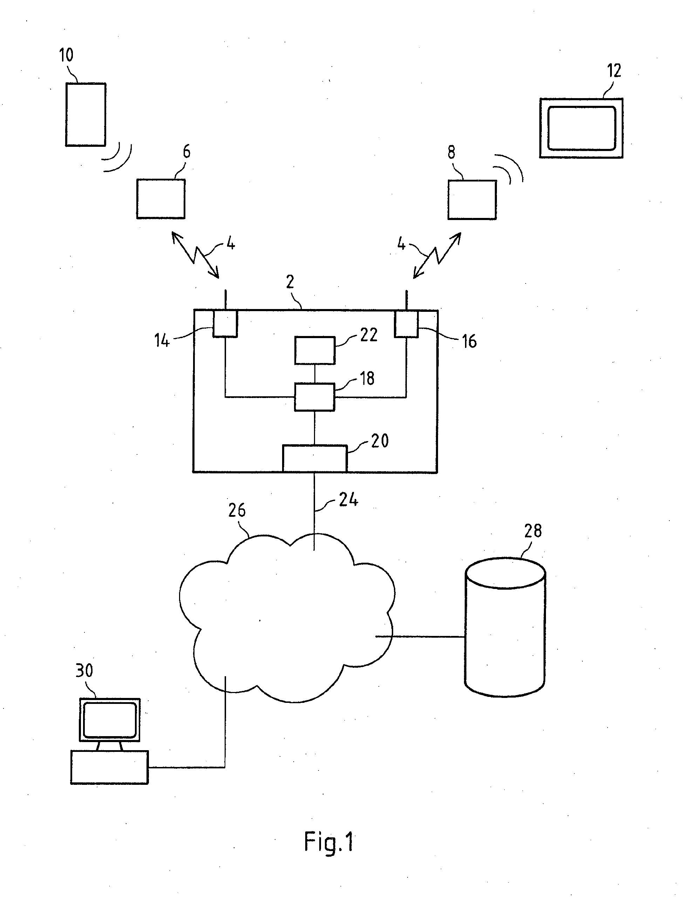

Fig. 1 zeigt ein System zur Heimautomatisierungssteuerung mit einer Heimautomatisierungssteuerungsvorrichtung 2. Die Heimautomatisierungssteuervorrichtung 2 kann über einen Funkbus 4 mit Sensoren 6 und Aktoren 8 kommunizieren. Im gezeigten Beispiel ist der Sensor 6 ein Funkempfänger, der Funksignale von einer Funkfernbedienung 10 empfangen kann.

Der gezeigte Aktor 8 ist ein Infrarot-Sender, der Infrarot-Pulse an ein Gerät der Unterhaltungselektronik, beispielsweise einen Fernseher 12, senden kann. Die gesendeten Infrarot-Pulse entsprechen im gezeigten Beispiel beispielsweise dem RC5-Code und erlauben es, verschiedenste Kommandos auf dem Fernseher 12 auszulösen.

Für die Kommunikation über den Funkbus 4 umfasst die Heimautomatisierungssteuerungsvorrichtung 2 Empfangsmittel 14 und Sendemittel 16. Die Empfangsmittel 14 und Sendemittel 16 können beispielsweise auch in einem einzigen Transceiver realisiert sein.

Die Heimautomatisierungssteuervorrichtung 2 enthält darüber hinaus einen Mikrocontroller 18 sowie eine Kommunikationsschnittstelle 20. Schließlich umfasst die Heimautomatisierungssteuervorrichtung 2 einen Speicher 22, der zum Beispiel zum Speichern einer Umsetzungstabelle geeignet ist.

Die Kommunikationsschnittstelle 20 ist beispielsweise über eine DSL-Verbindung 24 mit dem Internet 26 verbunden. Das Internet verbindet die Kommunikationsschnittstelle 20 mit einem Webserver 28 sowie einem Nutzer-PC 30.

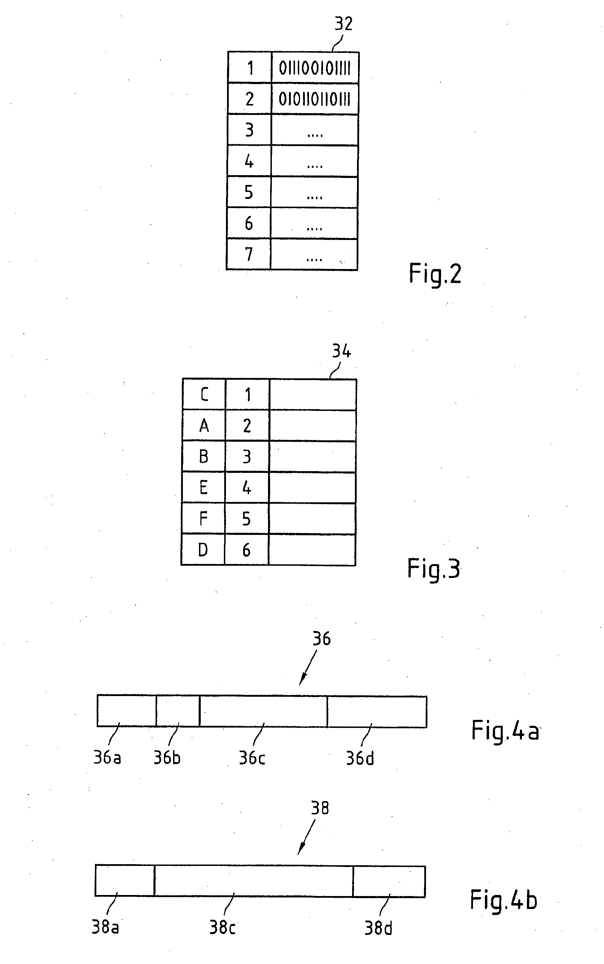

Über den Nutzer-PC 30 kann ein Nutzer eine Webseite zur Konfiguration seiner Heimautomatisierungssteuervorrichtung 2 aufrufen. Hierzu kann der Nutzer an seinem PC 30 einen Browser verwenden, der eine Webseite entweder auf dem Webserver 28 oder der Heimautomatisierungssteuervorrichtung 2 aufruft. Mit Hilfe der Webseite kann der Benutzer zunächst auswählen, was für einen Typ Fernseher 12 er betreiben möchte. Hierbei kann er zwischen unterschiedlichen Herstellern und dann zwischen unterschiedlichen Modellen des Herstellers wählen. Nachdem ein Nutzer über seinen Browser den von ihm betriebenen Fernseher 12 ausgewählt hat, wird in dem Webserver 28 die diesem Fernseher 12 zugeordnete Umsetzungstabelle 32 wie sie in Fig. 2 dargestellt ist, ausgewählt.

Fig. 2 zeigt eine beispielhafte Umsetzungstabelle 32, in der eine Mehrzahl von Infrarot-Sendebefehlen, hier nummeriert mit 1-7 enthalten sind. Jedem Infrarot-Sendebefehl ist eine Bitfolge zugeordnet wie sie in der zweiten Spalte der Tabelle in Fig. 2 zu entnehmen ist. Die Bitfolge, die einem Infrarot-Sendebefehl zugeordnet ist, ist gerätespezifisch, so dass für verschiedene Geräte zumindest teilweise unterschiedliche Tabellen in dem Webserver 28 gespeichert sind.

Nachdem der Benutzer über seinen PC 30 die Auswahl getroffen hat, welcher Fernseher 12 unterstützt wird, wird die entsprechende Umsetzungstabelle 32 von dem Webserver 28 über das Internet 26 und die DSL-Verbindung 24 an die Kommunikationsschnittstelle 20 übermittelt. Der Mikrocontroller 18 speichert die empfangene Umsetzungstabelle 32 in dem Speicher 22.

Anschließend kann der Nutzer über seinen PC 30 eine Konfiguration dergestalt vornehmen, dass verschiedene Steuerbefehle von dem Sensor 6 unterschiedlichsten Infrarot-Sendebefehlen zugeordnet werden.

So ist es beispielsweise möglich, dass die Funkfernbedienung 10 die Tasten A, B, C, D, E und F enthält. Diesen einzelnen Tasten bzw. von diesen Tasten ausgelöste Steuerbefehle kann der Benutzer verschiedene Infrarot-Sendebefehle zuordnen. Hierzu kann er wiederum über einen Browser die Umsetzungstabelle 32 aufrufen und jeder Taste, wie in Fig. 3 dargestellt, einen bestimmten Infrarot-Sendebefehl zuordnen.

In der erweiterten Umsetzungstabelle 34 in Fig. 3 hat der Benutzer beispielsweise die Taste C dem Infrarot-Steuerbefehl 1 zugeordnet. Die Taste A wurde dem Befehl 2, die Taste B dem Befehl 3, die Taste E dem Befehl 4, die Taste F dem Befehl 5 und die Taste D dem Befehl 6 zugeordnet. Die erweiterte Umsetzungstabelle 34 der Fig. 3 ist nur beispielhaft und ausschnittsweise und es ist natürlich möglich, eine weitere Vielzahl von Befehlen und Tasten (bzw. deren Steuerbefehlen) einander zuzuordnen und in einer erweiterten Umsetzungstabelle 34 abzuspeichern.

Nach der Konfiguration der Umsetzungstabelle 34, insbesondere der Zuordnung der Steuerbefehle zu verschiedenen Infrarot-Sendebefehlen, ist das Heimautomatisierungssteuerungssystem betriebsbereit.

Im Betrieb kann der Nutzer über die Funkfernbedienung 10 beispielsweise die Taste C drücken. Dieser Tastendruck wird per Funk an den Sensor 6 übertragen. Der Sensor 6 ermittelt den Tastendruck und erstellt einen ersten Datencontainer 36, wie er in Fig. 4a) dargestellt ist. Der Datencontainer 36 enthält ein Adressfeld 36a, ein Identifikationsfeld 36b, ein Datenfeld 36c sowie ein Prüfsummenfeld 36d.

Das Adressfeld 36a enthält die Adresse der Heimautomatisierungssteuervorrichtung 2 innerhalb des Funkbusses 4. Somit kann die Heimautomatisierungssteuervorrichtung 2, wenn sie den ersten Datencontainer 36 auf dem Funkbus 4 empfängt erkennen, dass der Datencontainer 36 für sie bestimmt ist.

Darüber hinaus ist in dem Identifikationsfeld 36b eine Bitfolge enthalten, die es dem Mikrocontroller 18 ermöglichen, zu erkennen, dass das darauffolgende Datenfeld 36c mit Steuerbefehlen gefüllt ist. Somit wird der Datencontainer 36, sobald er mittels der Empfangsmittel 14 in der Heimautomatisierungssteuervorrichtung 2 empfangen wurde, mittels des Mikrocontrollers 18 ausgewertet und es wird erkannt, dass das Datenfeld 36c Steuerbefehle enthält.

Diese Steuerbefehle sind beispielsweise die Befehle A, B, C, D, E und F. Die Steuerbefehle können den Tasten des Funksenders zugeordnet sein. Der Mikrocontroller 18, in dem die Umsetzungsmittel realisiert sein können, ermittelt somit aus dem Datenfeld 36c den Steuerbefehl. Anschließend ermittelt der Mikrocontroller 18 aus dem Speicher 22 die Umsetzungstabelle 34 und überprüft, welcher Infrarot-Sendebefehl dem ermittelten Steuerbefehl zugeordnet ist.

Außerdem kann mittels der Empfangsmittel 14 und des Prüfsummenfelds 36d überprüft werden, ob der erste Datencontainer 36 korrekt empfangen wurde.

Nachdem der Mikrocontroller 18 den dem empfangenen Steuerbefehl entsprechende Infrarot-Sendebefehl aus der Umsetzungstabelle 34 ermittelt hat, kann er diesen in einen zweiten Datencontainer 38, wie er in Fig. 4b) dargestellt ist, verpacken. Der Datencontainer 38 enthält ein Adressfeld 38a, ein Datenfeld 38c sowie ein Prüfsummenfeld 38d.

In dem Adressfeld 38a kodiert der Mikrocontroller 18 die Adresse des Aktors 8. Diese kann ebenfalls zuvor von einem Benutzer konfiguriert worden sein. Anschließend wird in das Datenfeld 38c der Infrarot-Sendebefehl geschrieben und eine Prüfsumme zur Überprüfung der Korrektheit des Datencontainers 38 in das Datenfeld 38d.

Der so erstellte Datencontainer 38 wird über die Sendemittel 16 und den Funkbus 4 ausgesendet. Der Aktor 8 kann anhand des Adressfelds 38a erkennen, dass der Datencontainer 38 für ihn bestimmt ist. Der Aktor 8 empfängt somit den Datencontainer 38 und ermittelt aus dem Datenfeld 38c den Infrarot-Sendebefehl. Diesen Infrarot-Sendebefehl sendet der Aktor 8 mittels Infrarot über eine Infrarot-Funkstrecke an den Fernseher 12. Hierbei ist der Infrarot-Sendebefehl insbesondere in einem RC5-Code kodiert und enthält eine Infrarot-Lichtpulsfolge, die von dem Fernseher 12 empfangen und für die Ausführung eines bestimmten Kommandos verwendet wird.

Mit Hilfe des gezeigten Systems ist es möglich, unterschiedlichste Fernseher oder andere Geräte der Unterhaltungselektronik in besonders einfacher Weise in ein Heimautomatisierungssystem einzubinden und anzusprechen. Über die zentral vorgehaltene Umsetzungstabelle ist es von Anbieterseite möglich, dem Nutzer stets aktuelle Infrarot-Sendebefehle auch für die aktuellsten Modelle zur Verfügung zu stellen. Ein Anlernen des Infrarot-Senders am Aktor 8, wie bisher notwendig, entfällt.

## Patentansprüche

1. Heimautomatisierungssteuerungsvorrichtung (2) umfassend:
- Empfangsmittel (14) eingerichtet zum Empfangen zumindest eines in einem ersten Datencontainer (36) enthaltenen Steuerbefehls,
- Sendemittel (16) eingerichtet zum Senden zumindest eines in einem zweiten Datencontainer (38) enthaltenen Infrarot-Sendebefehls,
- Kommunikationsmittel eingerichtet zum Empfangen von zumindest einer Umsetzungstabelle (32,34) mit gerätespezifischen Infrarot-Sendebefehlen, und
- Umsetzungsmittel eingerichtet zum Ermitteln des Steuerbefehls aus dem ersten Datencontainer (36), Umsetzen des ermittelten Steuerbefehls in einen korrespondierenden Infrarot-Sendebefehl entsprechend der Umsetzungstabelle und Verpacken des Infrarot-Sendebefehls in den zweiten Datencontainer (38),
**dadurch gekennzeichnet, dass**
in der Umsetzungstabelle (34) die Zuordnung eines Steuerbefehls zu einem Infrarot-Sendebefehl innerhalb der Umsetzungsmittel durch einen Nutzer konfigurierbar ist.

2. Heimautomatisierungssteuerungsvorrichtung nach Anspruch 1, **dadurch gekennzeichnet, dass** in dem Infrarot-Sendebefehl zumindest eine Geräteadresse und ein Stellkommando enthalten sind, insbesondere dass der Infrarot-Sendebefehl gemäß einem RC5-Code, einem RC5a-Code, einem RC6-Code oder einem RC6a-Code codiert ist.

3. Heimautomatisierungssteuerungsvorrichtung nach Anspruch 1 oder 2, **dadurch gekennzeichnet, dass** ein Steuerbefehl zumindest ein Stellkommando enthält.

4. Heimautomatisierungssteuerungsvorrichtung nach einem der Ansprüche 1 bis 3, **dadurch gekennzeichnet, dass** der erste und der zweite Datencontainer gemäß einem gemeinsamen ersten Protokoll codiert sind, insbesondere dass das erste Protokoll ein Protokoll eines Heimautomatisierungssystems ist.

5. Heimautomatisierungssteuerungsvorrichtung nach einem der Ansprüche 1 bis 4, **dadurch gekennzeichnet, dass** der erste und/oder der zweite Datencontainer jeweils zumindest ein Zieladressfeld enthalten, wobei das Zieladressfeld des ersten Datencontainers eine Adresse der Heimautomatisierungssteuerungsvorrichtung enthält und/oder wobei das Zieladressfeld des zweiten Datencontainers eine Adresse einer Infrarot-Sendeeinrichtung enthält.

6. Heimautomatisierungssteuerungsvorrichtung nach einem der Ansprüche 1 bis 5, **dadurch gekennzeichnet, dass** der erste Datencontainer zumindest ein Identifikationsfeld enthält, mit dessen Hilfe in den Empfangsmitteln erkennbar ist, dass der Datencontainer einen Steuerbefehl enthält.

7. Heimautomatisierungssteuerungsvorrichtung nach einem der Ansprüche 1 bis 6, **dadurch gekennzeichnet, dass** die Empfangsmittel und/oder die Sendemittel zum Übertragen des erste und/oder zweiten Datencontainers per Funk, insbesondere im SRD Band, eingerichtet sind.

8. Heimautomatisierungssteuerungsvorrichtung nach einem der Ansprüche 1 bis 7, **dadurch gekennzeichnet, dass** die in der Umsetzungstabelle enthaltenen Infrarot-Sendebefehle gerätespezifisch sind, wobei für verschiedene Geräte der Unterhaltungselektronik verschiedene Infrarot-Sendebefehle für identische Funktionen Verwendung finden.

9. System zur Heimautomatisierung mit einer Heimautomatisierungssteuerungsvorrichtung nach Anspruch 1, einem ersten Funkempfänger eingerichtet zum Empfangen von Steuerbefehlen von einem Funksender und zum Senden der Steuerbefehle in dem ersten Datencontainer an die Heimautomatisierungssteuerungsvorrichtung und einen Infrarot-Sendeeinrichtung eingerichtet zum Empfangen vcn Infrarot-Sendebefehlen in dem zweiten Datencontainer und zum Senden der Infrarot-Sendebefehle über Infrarot an ein Gerät der Unterhaltungselektronik.

10. System nach Anspruch 9, **dadurch gekennzeichnet, dass** die Umsetzungstabelle in den Kommunikationsmitteln von einem Webserver empfangbar ist.

11. System nach Anspruch 9 oder 10, **dadurch gekennzeichnet, dass** eine Mehrzahl von Umsetzungstabellen für verschiedene Geräte der Unterhaltungselektronik auf dem Webserver gespeichert sind und/oder dass der Webserver und/oder die Heimautomatisierungssteuerungsvorrichtung eine graphische Nutzerschnittstelle erzeugt, über die ein Gerät der Unterhaltungselektronik von einem Nutzer auswählbar ist und dass der Webserver die zu einem von dem Nutzer ausgewählten Gerät korrespondierende Umsetzungstabelle an die Kommunikationsmittel überträgt.

12. Verfahren zur Heimautomatisierungssteuerung, das von der Heimatautomatisierungseinrichtung gemß¨Anspruch 1 durchgeführt wird, umfassend:
- Empfangen zumindest eines in einem ersten Datencontainer (36) enthaltenen Steuerbefehls,
- Senden zumindest eines in einem zweiten Datencontainer (36) enthaltenen Infrarot-Sendebefehls,
- Empfangen von zumindest einer Umsetzungstabelle (32,34) mit gerätespezifischen Infrarot-Sendebefehlen, und
- Ermitteln des Steuerbefehls aus dem ersten Datencontainer (36).
- Umsetzen des ermittelten Steuerbefehls in einen korrespondierenden Infrarot-Sendebefehl entsprechend der Umsetzungstabelle (32,34) und
- Verpacken des Infrarot-Sendebefehls in den zweiten Datencontainer (38) **gekennzeichnet durch**
- Konfigurieren der Zuordnung eines Steuerbefehls zu einem Infrarot-Sendebefehl innerhalb der Umsetzungsmittel **durch** einen Nutzer.

## Claims

1. Home automation control device (2) comprising:
- receiving means (14) configured to receive at least one control command contained in a first data container (36),
- sending means (16) configured to transmit at least one infrared transmission command contained in a second data container (38),
- communication means configured to receive at least one conversion table (32, 34) containing device-specific infrared transmission commands, and
- conversion means configured to determine the control command from the first data container (36), convert the determined control command into a corresponding infrared transmission command in accordance with the conversion table and to package this infrared transmission command into the second data container (38),
**characterised in that**
a control command can be configured by a user in the conversion table (34) to assign it to an infrared transmission command inside the conversion means.

2. Home automation control device according to Claim 1, **characterised in that** the infrared transmission command contains at least one device address and one adjustment command, and in particular **in that** the infrared transmission command is coded according to an RC-5 code, an RC5a code, an RC6 code or an RC6a code.

3. Home automation control device according to Claims 1 or 2, **characterised in that** a control command contains at least one adjustment command.

4. Home automation control device according to any one of Claims 1-3, **characterised in that** the first and second data containers are coded in accordance with a common first protocol, and in particular **in that** the first protocol is a home automation system protocol.

5. Home automation control device according to any one of Claims 1-4, **characterised in that** the first and/or second data container each contain at least one target address field, wherein the target address field of the first data container contains an address of the home automation control device and/or wherein the target address field of the second data container contains an address of an infrared transmission device.

6. Home automation control device according to any one of Claims 1-5, **characterised in that** the first data container contains at least one identification field, enabling the receiving means to recognise that the data container contains a control command.

7. Home automation control device according to any one of Claims 1-6, **characterised in that** the receiving means and/or the sending means are configured to transmit via radio the first and/or second data container, in particular in the Short Range Devices (SRD) band.

8. Home automation control device according to any one of Claims 1-7, **characterised in that** the infrared transmission commands contained in the conversion table are device-specific, wherein different infrared transmission commands are used for the same functions for different consumer electronics devices.

9. Home automation system with a home automation control device according to Claim 1, a first radio receiver configured to receive control commands from a radio transmitter and to send the control commands in the first data container to the home automation control device and an infrared transmission device configured to receive infrared transmission commands in the second data container and to transmit the infrared transmission commands via infrared to a consumer electronics device.

10. System according to Claim 9, **characterised in that** the conversion table in the communication means can be received by a web server.

11. System according to Claim 9 or 10, **characterised in that** the multiplicity of the conversion tables for different consumer electronics devices are stored in the web server and/or **in that** the web server and/or the home automation control device generate a graphical user interface which enables a user to select a consumer electronics device and **in that** the web server transmits the conversion table which corresponds to the device selected by the user to the communication devices.

12. Process for home automation control (1) comprising:
- receiving of at least one control command contained in a first data container (36),
- transmitting of at least one infrared transmission command contained in a second data container (38),
- receiving of at least one conversion table (32, 34) containing device-specific infrared transmission commands, and
- determining of the control command from the first data container (36)
- converting of the detected control command into a corresponding infrared transmission command in accordance with the conversion table (32, 34) and
- packing of this infrared transmission command into the second data container (38)
**characterised by**
- configuring an assignment of a control command to an infrared transmission command inside the conversion means by a user.

## Revendications

1. Dispositif de commande d'automatisation domestique (2) qui comprend:
- des moyens de réception (14) qui sont configurés pour recevoir au moins un ordre de commande qui est contenu dans un premier conteneur de données (36),
- des moyens d'émission (16) qui sont configurés pour émettre au moins un ordre d'émission infrarouge qui est contenu dans un deuxième conteneur de données (38),
- des moyens de communication qui sont configurés pour recevoir au moins une table de correspondance (32, 34) avec des ordres d'émission infrarouges spécifiques aux appareils, et
- des moyens de conversion qui sont configurés pour détecter l'ordre de commande en provenance du premier conteneur de données (36), convertir l'ordre de commande détecté en un ordre d'émission infrarouge correspondant conformément à la table de correspondance et empaqueter l'ordre d'émission infrarouge dans le deuxième conteneur de données (38),
**caractérisé en ce que**, dans la table de correspondance (34), l'association d'un ordre de commande à un ordre d'émission infrarouge peut être configurée, dans les moyens de conversion, par un utilisateur.

2. Dispositif de commande d'automatisation domestique selon la revendication 1,
**caractérisé en ce que** l'ordre d'émission infrarouge contient au moins une adresse d'appareil et un ordre de réglage, en particulier que l'ordre d'émission infrarouge est codé selon un code RC5, un code RC5a, un code RC6 ou un code RC6a.

3. Dispositif de commande d'automatisation domestique selon revendication 1 ou 2,
**caractérisé en ce qu**' un ordre de commande contient au moins un ordre de réglage.

4. Dispositif de commande d'automatisation domestique selon l'une des revendications à 1 à 3,
**caractérisé en ce que** le premier conteneur de données et le deuxième conteneur de données (38) sont codés selon un premier protocole commun, en particulier q u e le premier protocole est un protocole d'un système d'automatisation domestique.

5. Dispositif de commande d'automatisation domestique selon l'une des revendications 1 à 4,
**caractérisé en ce que** le premier conteneur de données et / ou le deuxième conteneur de données (38) contiennent chacun un champ d'adresse de destination, sachant que le champ d'adresse de destination du premier conteneur de données contient une adresse du dispositif de commande d'automatisation domestique et / ou sachant que le champ d'adresse de destination du deuxième conteneur de données contient une adresse d'un dispositif d'émission infrarouge.

6. Dispositif de commande d'automatisation domestique selon l'une des revendications 1 à 5,
**caractérisé en ce que** le premier conteneur de données contient au moins un champ d'identification à l'aide duquel il est possible de reconnaître, dans les moyens de réception, que le conteneur de données contient un ordre de commande.

7. Dispositif de commande d'automatisation domestique selon l'une des revendications 1 à 6,
**caractérisé en ce que** les moyens de réception et / ou les moyens de commande sont configurés pour transmettre le premier conteneur de données et / ou le deuxième conteneur de données par radio, en particulier en bande SRD.

8. Dispositif de commande d'automatisation domestique selon l'une des revendications 1 à 7,
**caractérisé en ce que** les ordres d'émission infrarouges, contenus dans la table de correspondance, sont spécifiques aux appareils, sachant que, pour les divers appareils de l'électronique de divertissement, divers ordres d'émission infrarouges sont utilisés pour des fonctions identiques.

9. Système d'automatisation domestique qui comprend un dispositif de commande d'automatisation domestique selon la revendication 1, avec un premier récepteur radio qui est configuré pour recevoir des ordres de commande en provenance d'un émetteur radio et pour envoyer les ordres de commande au dispositif de commande d'automatisation domestique, dans un premier conteneur de données, et avec un dispositif d'émission infrarouge qui est configuré pour recevoir des ordres d'émission infrarouge dans le deuxième conteneur de données et émettre par infrarouge les ordres d'émission infrarouges à un appareil électronique de divertissement.

10. système de commande d'automatisation domestique selon la revendication 9,
**caractérisé en ce que** la table de correspondance peut être reçue par un serveur Web, dans les moyens de communication.

11. Système selon revendication 9 ou 10,
**caractérisé en ce que** plusieurs tables de correspondance pour différents appareils de l'électronique de divertissement sont mémorisés sur le serveur Web et / ou q u e le serveur Web et / ou le dispositif de commande d'automatisation domestique génèrent une interface d'utilisateur graphique, par l'intermédiaire de laquelle un appareil électronique de divertissement peut être sélectionné par un utilisateur et que le serveur Web transmet aux moyens de communication la table de correspondance relative à un appareil sélectionné par l'utilisateur.

12. Procédé de commande d'automatisation domestique (1) qui comprend :
- la réception d'au moins un ordre de commande qui est contenu dans un premier conteneur de données (36),
- l'émission d'au moins un ordre d'émission infrarouge qui est contenu dans un deuxième conteneur de données (38),
- la réception d'au moins une table de correspondance (32, 34) avec des ordres d'émission infrarouges spécifiques aux appareils, et
- la détection de l'ordre de commande en provenance du premier conteneur de données (36),
- la conversion de l'ordre de commande détecté en un ordre d'émission infrarouge correspondant conformément à la table de correspondance (32, 34), et
- l'empaquetage de l'ordre d'émission infrarouge dans le deuxième conteneur de données (38),
**caractérisé par**
la configuration de l'association d'un ordre de commande à un l'ordre d'émission infrarouge, dans les moyens de conversion, par un utilisateur.
